# EUROPEAN PATENT SPECIFICATION

(11) **EP 1 432 080 B1**
(45) Date of publication and mention of the grant of the patent: **21.11.2007**
(21) Application number: 03258000.3
(22) Date of filing: 18.12.2003
(51) Int. Cl.: H01R 13/52, H01R 13/639, H02G 3/08

(54) **Electrical connectors**
Elektrische Verbinder
Connecteurs électriques

(30) Priority: 19.12.2002 GB 0229575
(43) Date of publication of application: 23.06.2004
(73) Proprietor: Timeguard Limited, London NW2 6ND (GB)
(72) Inventor: Kissane, Christopher John, Watford Hertfordshire WD17 4NA (GB)
(74) Representative: Coles, Graham Frederick

(56) References cited:
- FR-A- 2 823 608
- GB-A- 2 269 485
- GB-A- 2 366 096

## Description

This invention relates to electrical connectors of the kind having a lid that closes upon a body-part of the connector to define an enclosure with sealing between the lid and the body-part against ingress of water into the enclosure,
wherein a cable-port for enabling an electrical cable to exit the enclosure between the lid and the body-part involves first resilient sealing-means that comprises a pair of first resilient elements which are carried by the lid and body-part respectively and which have surfaces that bear conformably and sealingly on one another when the lid is closed, one of the first pair of first elements being slotted to receive a portion of a cable exiting the enclosure at the cable-port and to conform resiliently and sealingly to at least part of the circumference of the received cable when the lid is closed, and
wherein the cable-port includes a second pair of resilient elements carried by the lid and body-part respectively, which in the absence of an exiting cable between them, bear conformably and sealingly upon one another for sealing as aforesaid at the cable-port when the lid is closed, and which in the presence of a cable between them exiting the cable-port through the slotted element and with the lid closed, bear upon one another and the cable.

An electrical connector of the kind specified above is known from GB-A-2366096. The known electrical connector is a twin-socket connector that provides a watertight enclosure for the sockets and any plugs engaged with them. Integrity of the watertight sealing of the enclosure of the known connector is maintained at ports where cables from the plugs exit the enclosure, and in this respect, each port includes a pair of grooved, resilient elements which when brought together with their grooves mutually aligned define a conical passageway for tight fitting to the cable in sealing engagement around the cable-circumference. These elements are located in front of another pair of resilient elements which maintain the watertight seal when there is no exiting cable, by face-to-face abutment with one another and by bearing conformably and sealingly on the grooved elements.

It is an object of the present invention to provide an electrical connector of the kind specified of improved form in regard to maintenance of watertight sealing at the cable-port.

According to the present invention an electrical connector of the kind specified is characterised in that one of the elements of the second pair bridges the junction between the abutting faces of the first pair of elements
the slotting of the slotted element is of a V-shape and extends substantially at right angles to the junction between the second pair of elements, and
the second pair of resilient elements, in the absence and in the presence of a cable between them exiting the cable-port through the slotted element, bear conformably and sealingly against the slotted element for sealing as aforesaid at the cable-port when the lid is closed.

The abutting surfaces of the first pair of elements may be flat surfaces, and one of the abutting surfaces of the second pair of elements may have a ridge for entering a groove of the other element of the pair for establishing a labyrinthian watertight seal between the abutting surfaces of the second pair of elements when the lid is closed.

The second pair of elements may be located in front (in the sense of to the outside) of the elements of the first pair of elements at the cable-port.

The slot in the slotted element may extend in a direction that is substantially at right angles to the junction between the abutting surfaces of the second pair of elements.

The connector may include a switch for selectively isolating the connector electrically, and a pivotable lever for operating the switch. The lever may obstruct opening of the lid when the switch is in its 'ON' condition.

An electrical connector in accordance with the present invention will now be described, by way of example, with reference to the accompanying drawings, in which:
Figure 1 is a plan view of the electrical connector in accordance with the invention, with its lid removed and showing a plug engaged with one of its twin sockets;
Figure 2 is a front elevation of the electrical connector, partly in section and with its lid removed, the section being taken on the line II-II of Figure 1;
Figure 3 is a side elevation of the electrical connector, partly in section and with its lid closed, the section being taken on the line III-III of Figure 1;
Figure 4 is a plan view of the electrical connector, with its lid locked closed by a padlock;
Figure 5 is an isometric view of the lid of the electrical connector;
Figure 6 is a front elevation to enlarged scale of a pair of abutting sealing-strips of the electrical connector;
Figure 7 is a cross-section of the pair of sealing-strips of Figure 6 in the absence of compression on them from the lid, the cross-section being taken within a cable-port of the electrical connector and showing their abutment within the port with one of two pairs of forward sealing-blocks of the electrical connector;
Figures 8 to 10 are, respectively, a plan view from above, a sectional end view and a plan view from below of the upper sealing-block of the pair of forward sealing-blocks shown in Figure 7;
Figures 11 to 13 are, respectively, a plan view from above, a sectional end view and a plan view from below of the lower sealing-block of the pair of forward sealing-blocks shown in Figure 7;
Figure 14 is a sectional view corresponding to Figure 7 when a cable exits the cable port and the sealing-strips and the forward sealing-blocks are compressed under the lid of the electrical connector;
Figure 15 is a front view of the forward sealing-blocks in the condition represented by Figure 14; and
Figure 16 is a front view, partly broken away, of the sealing-strips in the condition represented by Figure 14.

The connector to be described with reference to the drawings is a twin-socket connector of a conventional three-pin 13-amp plug-and-socket connection for a mains electricity power supply.

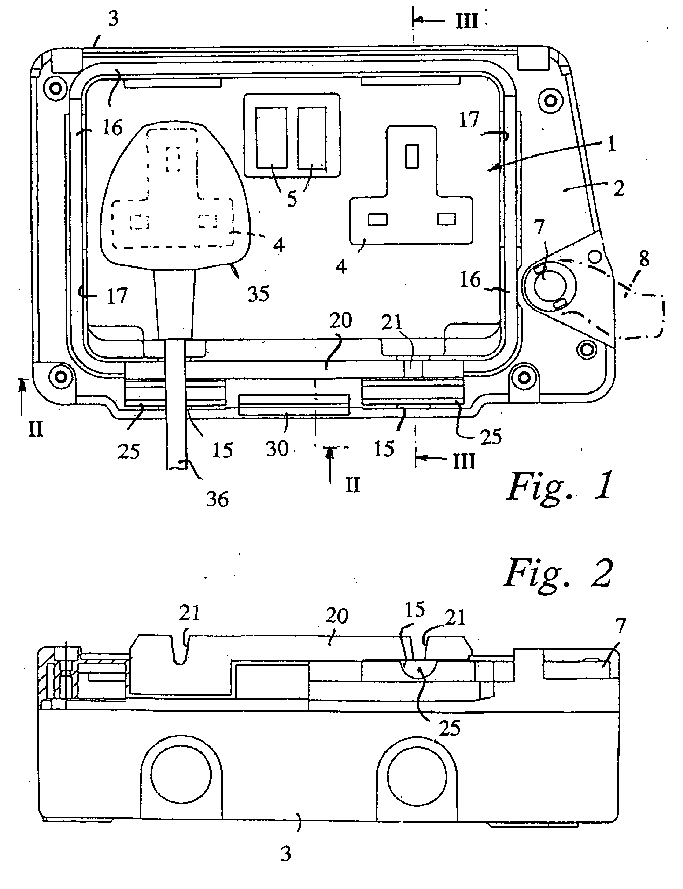

Referring to Figures 1 and 2, the socket connector has a base plate 1 that is carried within a surrounding frame 2 of a mounting box 3. Two three-pin socket outlets 4 are located side by side on the plate 1 together with switches 5 connected to them respectively. The plate 1 may also incorporate means for residual-current detection and/or fuse protection for the two outlets 4.

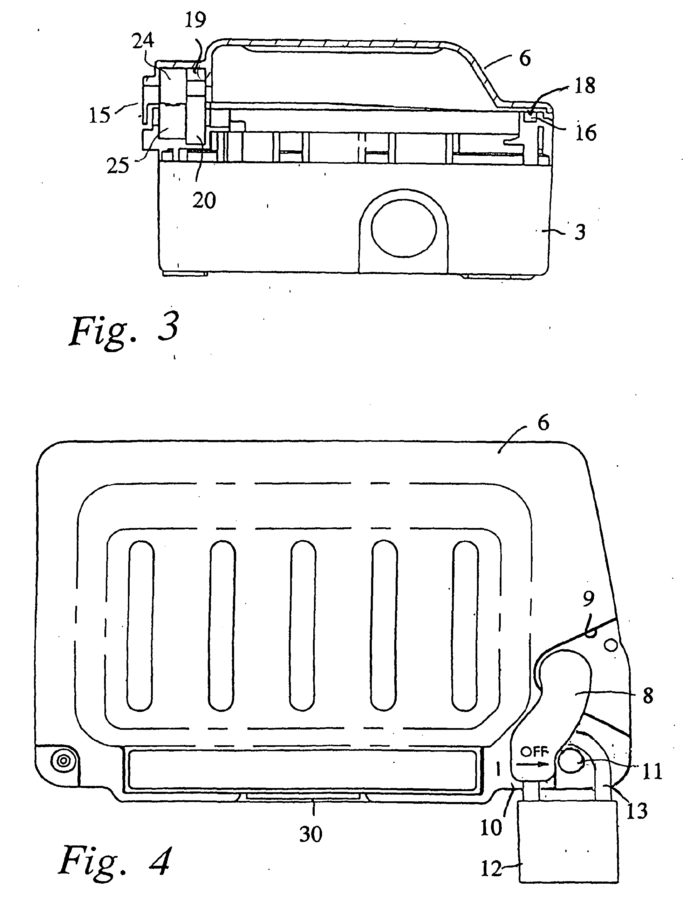

As illustrated in Figures 3 to 5, to which reference will now also be made, a transparent protective lid 6 (omitted from Figures 1 and 2), is mounted on hinges (not shown) that are located towards the back of the frame 2. The hinges allow the lid 6 to be opened up from the plate 1 to afford access to the socket outlets 4, and then to be closed down over it again to establish a sealed enclosure containing the plate 1 and the outlets 4.

An electrical double-pole switch (not shown), located in the connector-box 3, is provided for isolating the socket outlets 4 and their switches 5 from power supplied to the connector-box 3. A lever 8 for operating the switch is mounted on a spindle 7, being in this regard pivotable between an 'OFF' position as shown in chain-dotted outline in Figure 1, in which the socket outlets 4 and their switches 5 are isolated electrically, and an 'ON' position as shown in Figure 4 in which power is supplied to the switches 5 for the socket outlets 4. In its 'OFF' position, the lever 8 extends sideways of the box 3 within a cut-out 9 of the lid 6 so that the lid 6 can be freely hinged open and closed. However, when the lever 8 is pivoted into its 'ON' position with the lid 6 closed, it bears on a bottom corner 10 of the lid 6. Thus, while power is supplied to the switches 5 for the socket outlets 4, the lid 6 is held down by the lever 8 and cannot be opened. An interlock (not shown) between the lid 6 and the lever 8 ensures that the lever 8 cannot be moved into the 'ON' position while the lid 6 is open.

The lever 8 is configured such that it just passes over an upwardly-projecting pin 11 of the lid 6 in moving to the 'ON' position, and can be locked in that position as illustrated in Figure 4 using a padlock 12. More particularly, the shackle 13 of the padlock 12 is threaded round the pin 11 to lie against a downwardly-projecting shoulder of the underside of the lever 8, so that pivotal movement of the lever 8 from the 'ON' position is blocked by abutment of the shoulder with the shackle 13 while the padlock 12 is engaged.

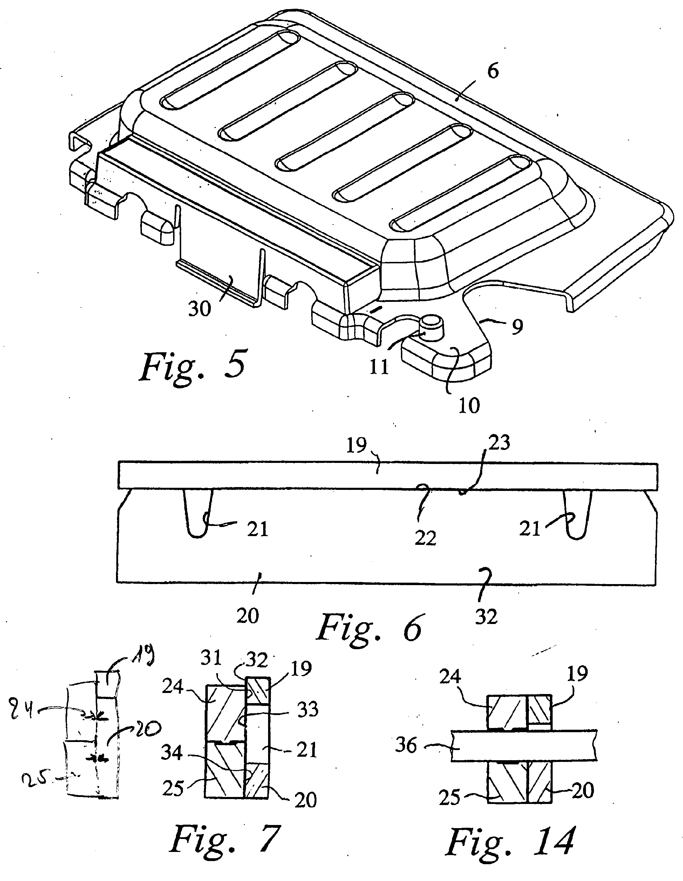

An effective watertight seal is formed between the lid 6 and the frame 2 when the lid 6 is held closed. Referring especially to Figures 1 to 3, the seal is formed throughout the whole periphery of the plate 1 apart from at, and between, two cable-ports 15 (only one shown fully in Figure 2) located in the front of the frame 2, by a resilient string 16 of expanded-foam rubber that is inset into a part-peripheral gutter 17 of the frame 2. When the lid 6 is closed, a bead 18 (Figure 3) on its underside presses into the string 16 throughout its full length, and two rectangular, foam-rubber strips 19 and 20 which are let into the front of the lid 6 and frame 2 respectively, close onto one another. The two strips 19 and 20, which extend along the front of the frame 2 overlapping both ports 15, are of the form illustrated in Figures 6 and 7.

The strip 20 is slotted, and has in this regard two slender V-shape slots 21 that open from its upper, flat face 22 in locations aligned in the frame 2 with the two ports 15 respectively. The lower, flat face 23 of the strip 19 is squeezed against the face 22 of the strip 20 when the lid 6 is closed so that a watertight seal is completed between the lid 6 and the frame 2 apart from at the slots 21 within the ports 15. Sealing at each port 15, however, is effected by two rectangular, resilient blocks 24 and 25 that are retained within the lid 6 and frame 2 respectively, in front (that is to say, to the outside) of the strips 19 and 20 at the respective port 15.

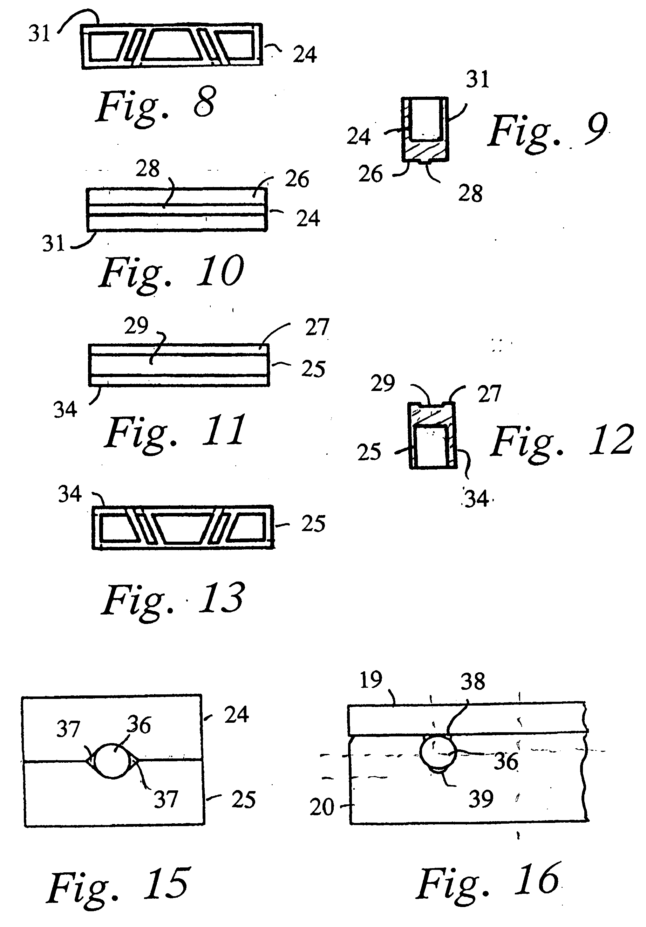

The blocks 24 and 25, as illustrated in Figures 8 to 10 and 11 to 13, respectively, are hollow mouldings of very soft rubber. The lower face 26 of the block 24, which closes onto the upper face 27 of the block 25 when the lid 6 is closed, is flat with a rectangular projecting ridge 28 running lengthwise and centrally of it. The upper face 27 of the block 25 is correspondingly flat but in this case has a rectangular groove 29 which runs lengthwise and centrally for receiving the ridge 28 when the block 24 closes onto the block 25. When the flats of faces 26 and 27 close onto one another, the ridge 28 is squeezed against the bottom of the groove 29 so that a labyrinthian, watertight seal is created throughout the junction between the blocks 24 and 25 at the port 15.

The lid 6 is secured closed and held tightly down by operation of a snap-in clip 30 (Figure 5) that engages the frame 2. While the clip 30 is in its operated condition, the blocks 24 and 25 at each port 15 are compressed tightly onto one another throughout the faces 26 and 27, including at the ridge 28 within the groove 29. Under this compression, the rear face 31 of each block 24 is pressed hard against the front faces 32 and 33 of the strips 19 and 20 respectively, and the rear face 34 of each block 25 is pressed hard against the face 33 of the strip 20. The block 24 accordingly bridges the junction of the abutting faces 22 and 23 of the strips 19 and 20, and together with the block 25 serves to provide a resilient seal giving forward cover of the slot 21 of the respective port 15. The integrity of the overall watertight sealing of the enclosure containing the plate 1 with its socket outlets 4, is as a result maintained at each port 15.

The integrity of the watertight sealing is maintained when plugs such as the plug 35 shown in Figure 1, are engaged with either or both of the socket outlets 4.
More particularly, the ports 15 allow the lid 6 to be closed onto any exiting cable, such as the cable 36 of the plug 35, without loss of watertight seal. When, in this regard, the lid 6 is opened and the plug 35 is inserted in the socket outlet 4, the cable 36 is laid to exit the connector via the aligned port 15. More particularly, the cable 36 is laid within the slot 21 of that port 15 and across the face 27 of the block 25 in front of it.

Closing the lid 6 and holding it closed by means of operation of the clip 30, sandwiches the cable 36 between the blocks 24 and 25 of the respective port 15 as illustrated in Figure 14. Because of their resilience, the blocks 24 and 25 conform closely to the cable cross-section, being squeezed onto the cable-surface for watertight sealing with it throughout a sector of the cable-surface of substantial angular extent both top and bottom, as illustrated in Figure 15. However, the squeezing of the blocks 24 and 25 onto the cable-surface top and bottom, causes them to bulge away from it leaving a cusp-shape gap 37, either side of the cable 36.

The breaching of the overall watertight seal that would otherwise result from the gaps 37 at the port 15, however, is prevented by sealing with the cable-surface where the cable 36 lies within slot 21 of the strip 20, behind the blocks 24 and 25. In this regard, the V-shape of the slot 21 ensures that throughout a substantial range of variation of cable-diameter, the strip 20 when compressed under the strip 19, conforms closely to the cable cross-section. More especially, the squeezing of the strip 20 causes it to press hard against the cable-surface to establish watertight sealing with it throughout a sector of substantial angular extent either side of the cable 36, as illustrated in Figure 16. Gaps 38 and 39 nonetheless remain, but because the slot 21 is substantially vertical they are confined to regions above and below the cable 36. This is in contrast to the location of the gaps 37 which, because the junction between the blocks 24 and 25 is substantially horizontal, are confined to regions either side of it.

Thus, the gaps 37 either side of the cable 36 where it is sandwiched between the blocks 24 and 25 within the port 15, are closed off immediately behind, by the strip 20 where it conforms closely with either side of the cable 36 within the slot 21. The gaps 38 and 39 that remain top and bottom within the slot 21 are out of register with the gaps 37, so there can be no direct leakage through the gaps 37 into the gaps 38 and 39, and they are themselves closed off from the front by the top and bottom sectors throughout which the blocks 24 and 25 conform sealingly with the cable-surface. Furthermore, the pressing of the blocks 24 and 25 on the strips 19 and 20, precludes leakage via the interface between the face 33 of the strip 20 and the faces 31 and 34 of the blocks 24 and 25. The integrity of watertight sealing is accordingly maintained.

Opening of the lid 6 and removal of the plug 35, and in particular removal of its cable 36 from the port 15, restores the uninterrupted face-to-face sealing of the blocks 24 and 25 when the lid 6 has been closed again and the clip 30 operated, so that fundamental watertight sealing within the port 15, is transferred back to them.

The sealing string 16, the strips 19 and 20 and the blocks 24 and 25 may all be of synthetic rubber, in particular all or some may be of a cellular nitrile or silicone rubber. The lid 6, and the frame 2 and box 3, may be of polycarbonate or polypropylene.

## Claims

1. An electrical connector having a lid (6) that closes upon a body-part (2) of the connector to define an enclosure with sealing between the lid (6) and the body-part (2) against ingress of water into the enclosure,
wherein a cable-port (15) for enabling an electrical cable (36) to exit the enclosure between the lid (6) and the body-part (2) involves first resilient sealing-means that comprises a pair of first resilient elements (19,20) which are carried by the lid (6) and body-part (2) respectively and which have surfaces (23,22) that bear conformably and sealingly on one another when the lid (6) is closed, one (20) of the first pair of first elements (19,20) being slotted to receive a portion of a cable (36) exiting the enclosure at the cable-port (15) and to conform resiliently and sealingly to at least part of the circumference of the received cable when the lid (6) is closed, and
wherein the cable-port (15) includes a second pair of resilient elements (24,25) carried by the lid (6) and body-part (2) respectively, which in the absence of an exiting cable (36) between them, bear conformably and sealingly upon one another for sealing as aforesaid at the cable-port (15) when the lid (6) is closed, and which in the presence of a cable (36) between them exiting the cable-port (15) through the slotted element (20) and with the lid (6) closed, bear upon one another and the cable (36),
**characterised in that** one (24) of the elements of the second pair (24,25) bridges the junction between the abutting faces (22,23) of the first pair of elements (19,20),
the slotting (21) of the slotted element (20) is of a V-shape and extends substantially at right angles to the junction (22,23) between the second pair of elements (24,25), and
the second pair of resilient elements (24, 25), in the absence and in the presence of a cable (36) between them exiting the cable-port (15) through the slotted element (20), bear conformably and sealingly against the slotted element (20) for sealing as aforesaid at the cable-port (15) when the lid (6) is closed.

2. An electrical connector according to Claim 1 wherein the resilient elements of said first pair comprise elements (19,20) that have flat faces (23,22) respectively for abutting one another closely face to face when the lid (6) is closed, and wherein the slotting (21) of the slotted element (20) of said first pair opens from the flat, abutting face (22) of that element for receiving said portion of the exiting cable (36).

3. An electrical connector according to Claim 1 or Claim 2 wherein the elements (24, 25) of the second pair of resilient elements have respective faces (26, 27) that abut one another with a ridge (28) of one (24) entered in a groove (29) of the other (25) for compression tightly within the groove (29) so as to establish a labyrinthian watertight seal at the junction (26,27) of the second pair of elements (24,25) when the lid (6) is closed.

4. An electrical connector according to any one of Claims 1 to 3 wherein the second pair of elements (24,25) are located in front (in the sense of to the outside) of the first pair of elements (19,20) at the cable-port (15), and are pressed hard into face-to-face contact with the first pair of elements (19,20) to cover the slotting (21) of the slotted element (20) sealingly when the lid (6) is closed in the absence of an exiting cable (36).

5. An electrical connector according to any one of Claims 1 to 4 wherein a socket (4) of a plug-and-socket connection is located within the enclosure, the enclosure being adapted to house a plug (35) engaged with the socket (4) with its connection cable (36) exiting the enclosure via the cable-port (15).

6. An electrical connector according to any one of Claims 1 to 5 wherein the lid (6) is hinged to the body-part (2).

7. An electrical connector according to any one of Claims 1 to 6 including a switch for selectively isolating the connector electrically, and a lever (8) for operating the switch that is selectively pivotable between a first position in which the switch is in its 'ON' condition and a second position in which it is in its isolating, 'OFF' condition, the lever (8) when in its first position obstructing opening of the lid (6) and when in its second position being clear of the lid (6) to allow the lid to be opened.

8. An electrical connector according to Claim 7 wherein the lever (8) when in its first position bears down on the lid (6) to hold it closed.

## Patentansprüche

1. Elektrischer Verbinder mit einem Deckel (6), der sich auf ein Körperteil (2) des Verbinders schließt, um ein Gehäuse mit einer Dichtung zwischen dem Deckel (6) und dem Körperteil (2) gegen den Eintritt von Wasser in das Gehäuse zu definieren,
wobei eine Kabelöffnung (15), um es zu ermöglichen, daß ein elektrisches Kabel (36) aus dem Gehäuse zwischen dem Deckel (6) und dem Körperteil (2) austritt, eine erste elastische Dichtungseinrichtung umfaßt, die ein Paar erster elastischer Elemente (19,20) aufweist, die durch den Deckel (6) bzw. das Körperteil (2) gehalten werden, und die Oberflächen (23,22) aufweisen, die formangepaßt und abdichtend aufeinander liegen, wenn der Deckel (6) geschlossen ist, wobei eines (20) des ersten Paares der ersten Elemente (19,20) geschlitzt ist, um einen Abschnitt eines Kabels (36) aufzunehmen, das aus dem Gehäuse an der Kabelöffnung (15) austritt, und um sich elastisch und abdichtend an mindestens einen Teil des Umfangs des aufgenommenen Kabels anzupassen, wenn der Deckel (6) geschlossen ist, und
wobei die Kabelöffnung (15) ein zweites Paar elastischer Elemente (24,25) umfaßt, die durch den Deckel (6) bzw. das Körperteil (2) gehalten werden, die beim Fehlen eines austretenden Kabels (36) zwischen ihnen formangepaßt und abdichtend zur Dichtung wie oben erwähnt an der Kabelöffnung (15) aufeinander liegen, wenn der Deckel (6) geschlossen ist, und die beim Vorhandensein eines Kabels (36) zwischen ihnen, das aus der Kabelöffnung (15) durch das geschlitzte Element (20) austritt, und mit geschlossenem Deckel (6), aufeinander und auf dem Kabel (36) liegen,
**dadurch gekennzeichnet, daß** eines (24) der Elemente des zweiten Paares (24,25) die Kontaktstelle zwischen den aneinanderstoßenden Flächen (22,23) des ersten Paares der Elemente (19,20) überbrückt,
die Schlitzung (21) des geschlitzten Elements (20) eine V-Form aufweist und sich im wesentlichen unter rechten Winkeln zur Kontaktstelle (22,23) zwischen dem zweiten Paar der Elemente (24,25) erstreckt, und
das zweite Paar der elastischen Elemente (24,25) beim Fehlen und beim Vorhandensein eines Kabels (36) zwischen ihnen, das aus der Kabelöffnung (15) durch das geschlitzte Element (20) austritt, formangepaßt und abdichtend gegen das geschlitzte Element (20) zur Dichtung wie oben erwähnt an der Kabelöffnung (15) liegt, wenn der Deckel (6) geschlossen ist.

2. Elektrischer Verbinder nach Anspruch 1, wobei die elastischen Elemente des ersten Paares Elemente (19,20) aufweisen, die jeweils ebene Flächen (23,22) aufweisen, um Fläche auf Fläche eng aneinanderzustoßen, wenn der Deckel (6) geschlossen ist, und wobei sich die Schlitzung (21) des geschlitzten Elements (20) des erste Paares von der ebenen, aneinanderstoßenden Fläche (22) jenes Elements zum Aufnehmen des Abschnitts des austretenden Kabels (36) öffnet.

3. Elektrischer Verbinder nach Anspruch 1 oder 2, wobei die Elemente (24,25) des zweiten Paares der elastischen Elemente jeweilige Flächen (26,29) aufweisen, die aneinanderstoßen, wobei eine Rippe (28) von einem (24) in eine Rille (29) des anderen (25) für eine dichte Kompression in der Rille (29) eintritt, um eine wasserdichte Labyrinthdichtung an der Kontaktstelle (26,27) des zweiten Paares der Elemente (24,25) herzustellen, wenn der Deckel (6) geschlossen ist.

4. Elektrischer Verbinder nach einem der Ansprüche 1 bis 3, wobei das zweite Paar der Elemente (24,25) (in die Richtung nach außen) vor dem ersten Paar der Elemente (19,20) an der Kabelöffnung (15) angeordnet ist, und fest in den Fläche-Fläche-Kontakt mit dem ersten Paar der Elemente (19,20) gepreßt wird, um die Schlitzung (21) des geschlitzten Elements (20) abdichtend abzudecken, wenn der Deckel (6) beim Fehlen eines austretenden Kabels (36) geschlossen ist.

5. Elektrischer Verbinder nach einem der Ansprüche 1 bis 4, wobei eine Buchse (4) einer Steckverbindung im Gehäuse angeordnet ist, wobei das Gehäuse eingerichtet ist, einen Stecker (35) aufzunehmen, der mit der Buchse (4) in Eingriff steht, wobei sein Verbindungskabel (36) aus dem Gehäuse über die Kabelöffnung (15) austritt.

6. Elektrischer Verbinder nach einem der Ansprüche 1 bis 5, wobei der Deckel (6) gelenkig mit dem Körperteil (2) verbunden ist.

7. Elektrischer Verbinder nach einem der Ansprüche 1 bis 6, der einen Schalter zur selektiven elektrischen Trennung des Verbinders, und einen Hebel (8) zum Betätigen des Schalters aufweist, der selektiv zwischen einer ersten Position, in der sich der Schalter in seinem "Ein"-Zustand befindet, und einer zweiten Position drehbar ist, in der er sich in seinem trennenden "Aus"-Zustand befindet, wobei der Hebel (8), wenn er sich in seiner ersten Position befindet, das Öffnen des Deckels (6) blockiert, und wenn er sich in seiner zweiten Position befindet, den Deckel (6) freigibt, um es zu ermöglichen, daß der Deckel geöffnet wird.

8. Elektrischer Verbinder nach Anspruch 7, wobei der Hebel (8), wenn er sich in seiner ersten Position befindet, auf den Deckel (6) herunterdrückt, um ihn geschlossen zu halten.

## Revendications

1. Connecteur électrique comportant un couvercle (6) qui se ferme sur une partie de corps (2) du connecteur pour définir un boîtier présentant une étanchéité entre le couvercle (6) et la partie de corps (2) contre la pénétration d'eau dans le boîtier,
dans lequel un orifice pour câble (15) destiné à permettre à un câble électrique (36) de sortir du boîtier entre le couvercle (6) et la partie de corps (2) implique des premiers moyens d'étanchéité élastiques qui comprennent une paire de premiers éléments élastiques (19, 20) qui sont portés respectivement par le couvercle (6) et la partie de corps (2) et qui présentent des surfaces (23, 22) qui s'appuient de manière conforme et étanche l'une sur l'autre lorsque le couvercle (6) est fermé, l'un (20) de la première paire de premiers éléments (19, 20) étant fendu pour recevoir une partie d'un câble (36) sortant du boîtier à l'orifice pour câble (15) et pour se conformer de manière élastique et étanche à au moins une partie de la circonférence du câble reçu lorsque le couvercle (6) est fermé, et
dans lequel l'orifice pour câble (15) comprend une seconde paire d'éléments élastiques (24, 25) portés respectivement par le couvercle (6) et la partie de corps (2), qui, en l'absence d'un câble sortant (36) entre eux, s'appuient de manière conforme et étanche l'un sur l'autre pour une étanchéité, comme mentionné ci-dessus, à l'orifice pour câble (15) lorsque le couvercle (6) est fermé, et qui, en présence d'un câble (36) entre eux sortant de l'orifice pour câble (15) à travers l'élément fendu (20) et avec le couvercle (6) fermé, s'appuient l'un sur l'autre et le câble (36),
**caractérisé en ce que** l'un (24) des éléments de la seconde paire (24, 25) traverse la jonction entre les faces en butée (22, 23) de la première paire d'éléments (19, 20),
la fente (21) de l'élément fendu (20) est d'une forme en V et s'étend sensiblement à angle droit vers la jonction (22, 23) entre la seconde paire d'éléments (24, 25), et
la seconde paire d'éléments élastiques (24, 25), en l'absence et en présence d'un câble (36) entre eux sortant de l'orifice pour câble (15) à travers l'élément fendu (20), s'appuient de manière conforme et étanche contre l'élément fendu (20) pour l'étanchéité, comme mentionné ci-dessus, à l'orifice pour câble (15) lorsque le couvercle (6) est fermé.

2. Connecteur électrique selon la revendication 1, dans lequel les éléments élastiques de ladite première paire comprennent des éléments (19, 20) qui présentent des faces plates (23, 22) respectivement pour venir en butée l'une à l'autre en face à face étroit lorsque le couvercle (6) est fermé, et dans lequel la fente (21) de l'élément fendu (20) de ladite première paire s'ouvre depuis la face de butée plate (22) de cet élément pour recevoir ladite partie du câble sortant (36).

3. Connecteur électrique selon la revendication 1 ou 2, dans lequel les éléments (24, 25) de la seconde paire d'éléments élastiques présentent des faces respectives (26, 27) qui sont en butée l'une contre l'autre, une arête (28) d'un élément (24) entrant dans une rainure (29) de l'autre élément (25) pour une compression étroite dans la rainure (29) de manière à établir un joint étanche à l'eau en labyrinthe à la jonction (26, 27) de la seconde paire d'éléments (24, 25), lorsque le couvercle (6) est fermé.

4. Connecteur électrique selon l'une quelconque des revendications 1 à 3, dans lequel la seconde paire d'éléments (24, 25) sont situés devant (dans le sens vers l'extérieur) de la première paire d'éléments (19, 20) à l'orifice pour câble (15), et sont pressés fortement en un contact de face à face avec la première paire d'éléments (19, 20) pour couvrir la fente (21) de l'élément fendu (20) de manière étanche lorsque le couvercle (6) est fermé en l'absence d'un câble sortant (36).

5. Connecteur électrique selon l'une quelconque des revendications 1 à 4, dans lequel un connecteur femelle (4) d'une connexion mâle-femelle est situé dans le boîtier, le boîtier étant adapté pour loger un connecteur mâle (35) engagé avec le connecteur femelle (4) avec son câble de connexion (36) sortant du boîtier via l'orifice pour câble (15).

6. Connecteur électrique selon l'une quelconque des revendications 1 à 5, dans lequel le couvercle (6) est articulé sur la partie de corps (2).

7. Connecteur électrique selon l'une quelconque des revendications 1 à 6, comprenant un commutateur pour isoler sélectivement le connecteur électriquement, et un levier (8) pour actionner le commutateur qui peut pivoter sélectivement entre une première position dans laquelle le commutateur est dans son état 'MARCHE' et une seconde position dans laquelle il est dans son état 'ARRET' isolant, le levier (8), lorsqu'il est dans sa première position empêchant l'ouverture du couvercle (6), et lorsqu'il est dans sa seconde position, étant libéré du couvercle (6) pour permettre au couvercle de s'ouvrir.

8. Connecteur électrique selon la revendication 7, dans lequel le levier (8), lorsqu'il est dans sa première position, appuie vers le bas sur le couvercle (6) pour le maintenir fermé.
